# EUROPÄISCHE PATENTSCHRIFT

(11) **EP 1 205 424 B1**
(45) Veröffentlichungstag und Bekanntmachung des Hinweises auf die Patenterteilung: **29.06.2005**
(21) Anmeldenummer: 01125211.1
(22) Anmeldetag: 24.10.2001
(51) Int. Cl.: B66F 9/075, B60K 1/04

(54) **Flurförderzeug mit einem Batterieblock**
Industrial truck with a battery pack
Chariot de manutention avec un bloc de batterie

(30) Priorität: 08.11.2000 DE 10055311
(43) Veröffentlichungstag der Anmeldung: 15.05.2002
(73) Patentinhaber: STILL WAGNER GmbH & Co KG, 72766 Reutlingen-Mittelstadt (DE)
(72) Erfinder: Marquart, Jürgen, Dipl-Ing., 75331 Engelsbrand (DE)
(74) Vertreter: Lang, Michael (DE)

(56) Entgegenhaltungen:
- DE-A- 19 622 694
- DE-U- 29 918 831
- PATENT ABSTRACTS OF JAPAN vol. 1999, no. 13, 30. November 1999 (1999-11-30) & JP 11 228087 A (TOYOTA AUTOM LOOM WORKS LTD), 24. August 1999 (1999-08-24)

## Beschreibung

Die Erfindung betrifft ein Flurförderzeug mit einem Batterieblock, der in einem Batteriefach angeordnet ist, wobei das Batteriefach mittels eines Batteriefachdeckels verschließbar ist, der zwischen einer Öffnungsstellung und einer Schließstellung schwenkbar ist und in der Schließstellung eine auf den Batterieblock wirkende Klemmkraft erzeugt.

Derartige Flurförderzeuge, beispielsweise Hubwagen oder Kommissioniergeräte, weisen neben einem elektrischen Fahrantrieb eine Hubhydraulik und gegebenenfalls Zusatzaggregate auf, die von dem Batterieblock mit elektrischer Energie versorgt werden. Der Batterieblock ist hierbei für Wartungsarbeiten und zum Aufladen nach Öffnen des Batteriefachdeckels von oben zugänglich. Als Alternative zum Aufladen des Batterieblocks kann der Batterieblock ausgetauscht werden, wobei der Batterieblock in Abhängigkeit von der Konstruktion des Flurförderzeugs durch die von dem Batteriefachdeckel verschließbare Öffnung in vertikaler Richtung oder durch eine seitliche Öffnung in horizontaler Richtung aus dem Flurförderzeug ausgetauscht werden kann.

Im Betrieb des Flurförderzeugs ist der Batterieblock in dem Batteriefach des Flurförderzeugs befestigt. Bei bekannten Flurförderzeugen sind hierzu Verriegelungseinrichtungen, beispielsweise Verriegelungsschrauben, Anschlagplatten oder Laschen, bekannt. Derartige Verriegelungseinrichtungen sind jedoch aufwendig und weisen bei einem Austausch des Batterieblocks einen hohen Montage- und Demontageaufwand auf. Zudem kann es bei derartigen Verriegelungseinrichtungen durch unsachgemäße Montage bzw. Demontage oder durch Vergessen von Teilen zu einer fehlerhaften Verriegelung des Batterieblocks kommen, wodurch der Batterieblock während des Betriebs des Flurförderzeugs nicht sicher im Batteriefach fixiert ist.

Aus der DE 299 18 831 ist ein gattungsgemäßen Flurförderzeug bekannt, bei dem mittels eines am Batteriefachdeckel angeordneten Hebels in der Schließstellung eine auf den Batterieblock wirkende Klemmkraft erzeugbar ist. Hierdurch kann auf einfache Weise der Batterieblock bei geschlossenem Batteriefachdeckel in dem Batteriefach verriegelt werden. Der Batteriefachdeckel ist hierbei jedoch von der Bedienperson von Hand in die Schließstellung bzw. Öffnungsstellung zu schwenken. Insbesondere bei großen Batteriefachdeckel bzw. Batteriefachdeckel mit Zusatzeinrichtungen, beispielsweise Bedienungseinrichtungen, ergibt sich ein hohes Gewicht des Batteriefachdeckels, wodurch sich hohe Bedienkräfte und somit eine schwierige Handhabung des Batteriefachdeckels ergibt. Zudem muss der Batteriefachdeckel in der Öffnungsstellung gesichert werden, um ein unbeabsichtigtes Zufallen des Batteriefachdeckels und eine damit verbundene Gefährdung der Bedienperson bei der Wartung bzw. dem Austausch des Batterieblocks zu verhindem.

Der vorliegenden Erfindung liegt die Aufgabe zugrunde, ein Flurförderzeug der eingangs genannten Art zur Verfügung zu stellen, bei dem der Batterieblock auf einfache Weise verriegelbar und der Batteriefachdeckel sicher und leicht handzuhaben ist.

Diese Aufgabe wird erfindungsgemäß dadurch gelöst, dass ein Mittel zum Erzeugen einer den Batteriefachdeckel in die Öffnungsstellung und in die Schließstellung beaufschlagenden Kraft vorgesehen ist. Das Mittel zum Erzeugen der Kraft ist somit derart ausgebildet, dass in der Schließstellung des Batteriefachdeckels eine Klemmkraft zur Verriegelung des Batterieblocks erzeugt wird, wodurch eine einfache Verriegelung des Batterieblocks erzielt wird, und in der Öffnungsstellung eine Kraft erzeugt wird, die den Batteriefachdeckel sicher in der Öffnungsstellung hält. Durch die von dem Mittel erzeugte, den Batteriefachdeckel in die Öffnungsstellung beaufschlagende Kraft werden zudem geringe Bedienkräfte und somit eine leichte Handhabung des Batteriefachdeckels erzielt.

Gemäß einer bevorzugten Ausführungsform der Erfindung ist der Batteriefachdeckel um eine im wesentlichen horizontale Achse drehbar gelagert, die über dem Batterieblock angeordnet ist, wobei die Wirklinie der Kraft in der Öffnungsstellung des Batteriefachdeckels über der Achse und in der Schließstellung des Batteriefachdeckels unter der Achse angeordnet ist. Hierdurch wird eine Totpunktverriegelung erzielt, wodurch auf einfache Weise mittels eines Mittels zum Erzeugen der den Batteriefachdeckel beaufschlagenden Kraft in der Schließstellung des Batteriefachdeckels eine Klemmkraft für den Batterieblock und in Öffnungsstellung des Batteriefachdeckels eine den Batteriefachdeckel aufhaltende Kraft erzeugt werden kann.

In einer bevorzugten Ausführungsform der Erfindung ist das Mittel zum Erzeugen der Kraft als zumindest eine Gasfeder ausgebildet, die mit dem Batteriefachdeckel und dem Batteriefach in Wirkverbindung steht. Mit einer Gasfeder, beispielsweise einer Gasdruckfeder, die am Batteriefach und am Batteriefachdeckel angelenkt ist, kann auf einfache Weise der Batteriefachdeckel in die Schließstellung und die Öffnungsstellung beaufschlagt werden.

Zweckmäßigerweise ist die Gasfeder am Batteriefach an einem der Achse gegenüberliegenden Bereich angelenkt. Mit einer derartigen Anlenkung der Gasfeder kann auf einfache Weise erzielt werden, dass die Längsachse der Gasfeder und somit die Wirklinie der von der Gasfeder erzeugten Kraft in der Öffnungsstellung des Batteriefachdeckels über der Achse und in der Schließstellung des Batteriefachdeckels unter der Achse angeordnet ist.

In einer Ausgestaltungsform der Erfindung ist der Batteriefachdeckel mit einem Hebelarm versehen, der in Schließstellung die Klemmkraft auf den Batterieblock ausübt, wobei der Batterieblock an einem Stützelement abgestützt ist. Hierdurch kann auf einfache Weise in der Schließstellung des Batteriefachdeckels aus der Kraft der Gasfeder eine Klemmkraft zur Verriegelung des Batterieblocks erzeugt werden.

Zweckmäßigerweise ist am Hebelarm ein Einstellelement, insbesondere eine Stellschraube, angeordnet, die in der Schließstellung mit dem Batterieblock in Wirkverbindung steht. Mit einem Einstellelement können auf einfache Weise bei geschlossenem Batteriefachdeckel Toleranzen ausgeglichen werden und somit eine sichere Übertragung der Klemmkraft auf den Batterieblock sichergestellt werden.

Der Hebelarm steht in Schließstellung des Batteriefachdeckels mit einer Innenseite einer vertikalen Wand des Batterieblocks in Wirkverbindung, die der Drehachse benachbart ist. Hierdurch kann der Batterieblock auf einfache Weise durch Schließen des Batteriefachdeckels verriegelt werden.

Sofern der Batteriefachdeckel mit einem Verriegelungseinrichtung versehen ist, mit der der Batteriefachdeckel in der Schließstellung verriegelbar ist, kann wirksam vermieden werden, dass sich der Batteriefachdeckel unbeabsichtigt öffnet.

Weitere Vorteile und Einzelheiten der Erfindung werden anhand des in den schematischen Figuren dargestellten Ausführungsbeispiels näher erläutert. Hierbei zeigt
- Figur 1: das Batteriefach eines erfindungsgemäßen Flurförderzeugs in einer Seitenansicht mit geschlossenem Batteriefachdeckel,
- Figur 2: das Batteriefach eines erfindungsgemäßen Flurförderzeugs in einer Seitenansicht mit geöffnetem Batteriefachdeckel und
- Figur 3: eine Draufsicht auf das Batteriefach eines erfindungsgemäßen Flurförderzeugs.

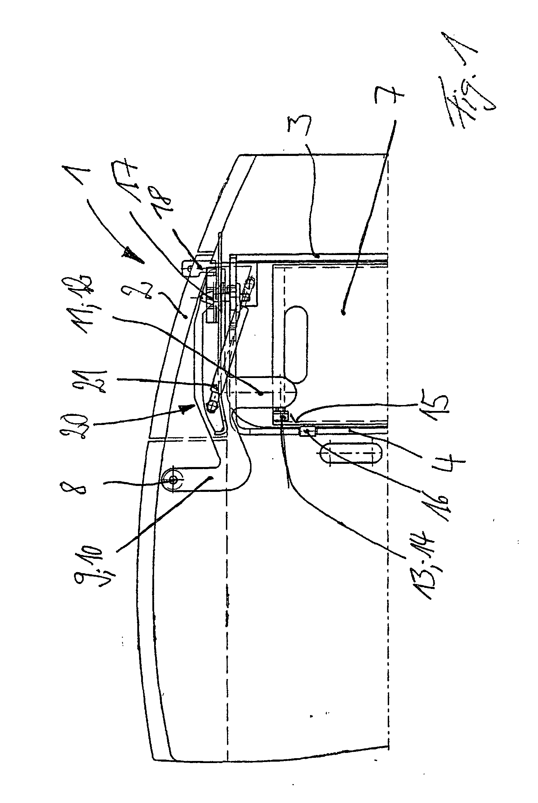

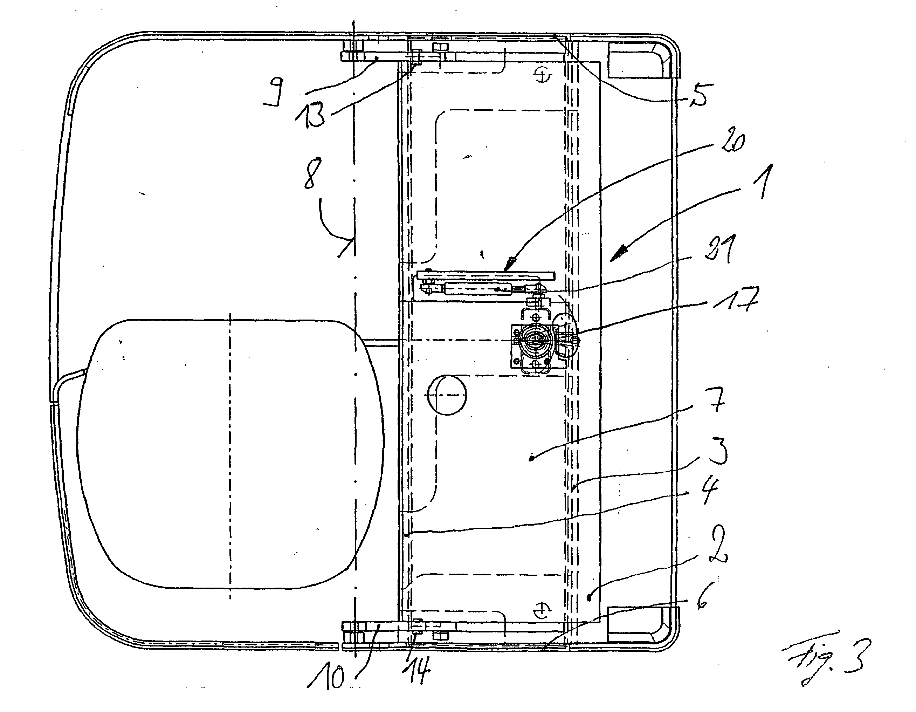

Die Figuren 1 und 3 zeigen das Batteriefach 1 eines erfindungsgemäßen Flurförderzeugs mit einem in der Schließstellung befindlichem Batteriefachdeckel 2. Das Batteriefach 1 weist eine Frontwand 3 und eine Rückwand 4 sowie Seitenwände 5, 6 auf, wobei zwischen der Frontwand 3, der Rückwand 4 und den Seitenwänden 5, 6 ein Batterieblock 7 angeordnet ist.

Der Batteriefachdeckel 2 ist schwenkbar um eine horizontale Achse 8 drehbar gelagert. Die Achse 8 ist hierbei im Bereich der Rückwand 4 des Batteriefachs 1 und im gezeigten Ausführungsbeispiel quer zur Fahrzeuglängsachse angeordnet. Der Batteriefachdeckel 7 ist hierbei im Bereich der Seitenwände 5, 6 mit jeweils einem Schwenkarm 9, 10 versehen, wobei durch die Schwenkarme 9, 10 die Achse 8 festlegen.

An den Schwenkarmen 9, 10 ist jeweils ein Hebelarm 11, 12 angeordnet, an dem ein als Stellschraube ausgebildetes Einstellelement 13, 14 angeordnet ist. Das Einstellelement 13, 14 ist hierbei von der Achse 8 beabstandet. In der Schließstellung des Batteriefachdeckels 2 liegt das Einstellelement 13, 14 an einer der Rückwand 4 des Batteriefachs 1 zugewandten vertikalen Wand 15 des Batterieblocks 7 an. Der Batterieblock 7 wird bei in Schließstellung befindlichem Batteriefachdeckel 2 durch die an den Hebeln 11 ,12 angeordnetem Einstellelemente 13, 14 in Richtung eines Stützelements 16 beaufschlagt, das beispielsweise an der Rückwand 4 angeordnet ist. Der Batterieblock 7 ist somit durch die über die Einstellelemente 13, 14 übertragene Klemmkraft innerhalb des Batteriefachs 1 bei geschlossenem Batteriefachdeckel 2 festgelegt und gesichert.

Zwischen dem Batteriefachdeckel 2 und dem Batteriefach 1 ist weiterhin eine Verriegelungseinrichtung 17 angeordnet, die in der Schließstellung des Batteriefachdeckels 2 den Batteriefachdeckel 2 verriegelt und somit ein unbeabsichtigtes Öffnen des Batteriefachdeckels 2 verhindert. Die Verriegelungseinrichtung 17 weist einen Entriegelungshebel 18 auf, wobei durch eine Betätigung des Entriegelungshebels 18 die Verriegelungseinrichtung 17 zum Öffnen des Batteriefachdeckels 2 entriegelt werden kann.

Erfindungsgemäß ist ein Mittel 20 zum Erzeugen einer den Batteriefachdeckel 2 in die Öffnungsstellung und in die Schließstellung beaufschlagenden Kraft vorgesehen. Das Mittel 20 ist als Gasfeder 21, beispielsweise Gasdruckfeder, ausgebildet, die am Batteriefachdeckel 2 und am Batteriefach 1 gelenkig befestigt ist. Die Gasfeder 21 ist hierbei am Batteriefach 1 im Bereich der Vorderwand 3 gelenkig gelagert.

Gemäß Figur 3 ist eine Gasfeder 21 im mittleren Bereich des Batteriefachs 1 angeordnet. Es ist jedoch ebenfalls möglich, jeweils eine Gasfeder im Bereich der Seitenwände 5, 6 anzuordnen.

Die gelenkige Anlenkung der Gasfeder 21 an dem Batteriefach 1 und dem Batteriefachdeckel 2 ist derart gewählt, dass die Längsachse der Gasfeder 21 und somit die Wirklinie der von der Gasfeder 21 in der Schließstellung des Batteriefachdeckels 2 auf den Batteriefachdeckel 2 übertragene Kraft unter der Achse 8 angeordnet ist. Hierdurch wird erzielt, dass in der Schließstellung des Batteriefachdeckels 2 der Batteriefachdeckel 2 von der Kraft der Gasfeder 21 in der Schließstellung gehalten wird und mittels des Hebelarms 9, 10 und dem am Hebelarm 9, 10 angeordneten Einstellelementen 13, 14 aus der Kraft der Gasfeder 21 eine Klemmkraft erzeugt wird, die den Batterieblock 7 innerhalb des Batteriefachs 1 fixiert.

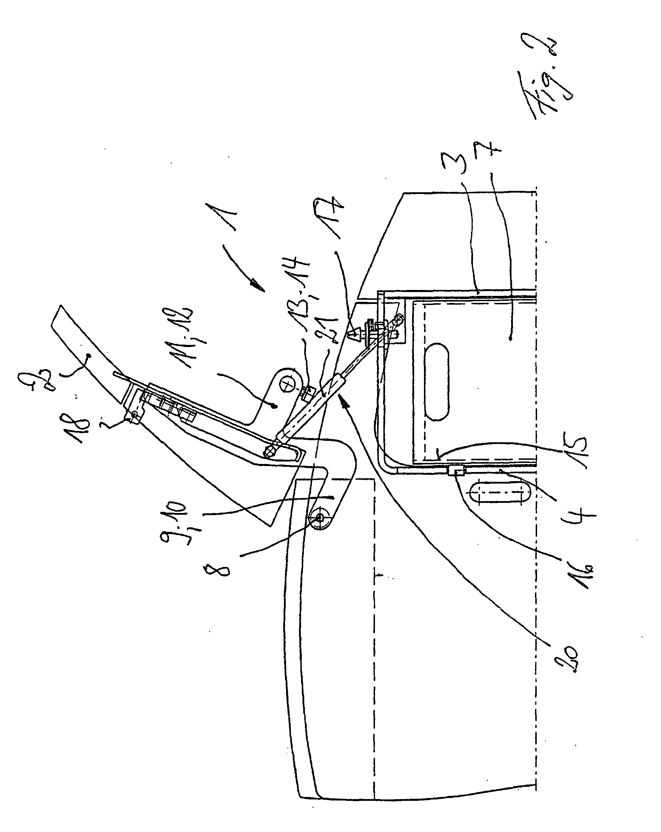

Die Figur 2 zeigt das Batteriefach 1 des Flurförderzeugs mit in Öffnungsstellung ausgelenktem Batteriefachdeckel 2. Die Anlenkung der Gasfeder 21 ist hierbei derart gewählt, dass die Längsachse der Gasfeder 21 und somit die Wirklinie der von der Gasfeder 21 erzeugten Kraft über der Achse 8 angeordnet ist. Hierdurch wird erzielt, dass der Batteriefachdeckel 2 nach Überschreiten des Totpunktes, in dem die Längsachse der Gasfeder 21 durch die Achse 8 läuft, von der Kraft der Gasfeder 21 in die Öffnungsstellung beaufschlagt wird und in der Öffnungsstellung gehalten wird.

## Patentansprüche

1. Flurförderzeug mit einem Batterieblock, der in einem Batteriefach angeordnet ist, wobei das Batteriefach mittels eines Batteriefachdeckels verschließbar ist, der zwischen einer Öffnungsstellung und einer Schließstellung schwenkbar ist und in der Schließstellung eine auf den Batterieblock wirkende Klemmkraft erzeugt, **dadurch gekennzeichnet, dass** ein Mittel (20) zum Erzeugen einer den Batteriefachdeckel (2) in die Öffnungsstellung und in die Schließstellung beaufschlagenden Kraft vorgesehen ist und dieses Mittel zusätzlich die Batterie fixiert.

2. Flurförderzeug nach Anspruch 1, **dadurch gekennzeichnet, dass** der Batteriefachdeckel (2) um eine im wesentlichen horizontale Achse (8) drehbar gelagert ist, die über dem Batterieblock (7) angeordnet ist, wobei die Wirklinie der Kraft in der Öffnungsstellung des Batteriefachdeckels (2) über der Achse (8) und in der Schließstellung des Batteriefachdeckels (2) unter der Achse (8) angeordnet ist.

3. Flurförderzeug nach Anspruch 1 oder 2, **dadurch gekennzeichnet, dass** das Mittel (20) zum Erzeugen der Kraft als zumindest eine Gasfeder (21) ausgebildet ist, die mit dem Batteriefachdeckel (2) und dem Batteriefach (1) in Wirkverbindung steht.

4. Flurförderzeug nach Anspruch 3, **dadurch gekennzeichnet, dass** die Gasfeder (21) am Batteriefach (1) an einem der Achse (8) gegenüberliegenden Bereich angelenkt ist.

5. Flurförderzeug nach einem der Ansprüche 1 bis 4, **dadurch gekennzeichnet, dass** der Batteriefachdeckel (2) mit einem Hebelarm (11; 12) versehen ist, der in Schließstellung die Klemmkraft auf den Batterieblock (7) ausübt, wobei der Batterieblock (7) an einem Stützelement (16) abgestützt ist.

6. Flurförderzeug nach Anspruch 5, **dadurch gekennzeichnet, dass** am Hebelarm (11; 12) ein Einstellelement (13; 14), insbesondere eine Stellschraube, angeordnet ist, die in der Schließstellung mit dem Batterieblock (7) in Wirkverbindung steht.

7. Flurförderzeug nach Anspruch 5 oder 6, **dadurch gekennzeichnet, dass** der Hebelarm (11; 12) in Schließstellung des Batteriefachdeckels (2) mit einer Innenseite einer vertikalen Wand (15) des Batterieblocks (7) in Wirkverbindung steht, die der Drehachse (8) benachbart ist.

8. Flurförderzeug nach einem der vorangegangenen Ansprüche, **dadurch gekennzeichnet, dass** der Batteriefachdeckel (2) mit einer Verriegelungseinrichtung (17) versehen ist, mit der der Batteriefachdeckel (2) in der Schließstellung verriegelbar ist.

## Claims

1. Industrial truck having a battery block, which is arranged in a battery compartment, it being possible for the battery compartment to be closed by means of a battery-compartment lid, which can be pivoted between an open position and a closed position and which, in the closed position, produces a clamping force acting on the battery block, **characterized in that** a means (20) is provided for the purpose of producing a force acting on the battery-compartment lid (2) so as to move into the open position and into closed position, and this means additionally fixes the battery.

2. Industrial truck according to Claim 1, **characterized in that** the battery-compartment lid (2) is mounted such that it can rotate about an essentially horizontal axis (8), which is arranged above the battery block (7), the line of action of the force being arranged above the axis (8) in the open position of the battery-compartment lid (2) and below the axis (8) in the closed position of the battery-compartment lid (2).

3. Industrial truck according to Claim 1 or 2, **characterized in that** the means (20) for producing the force is in the form of at least one gas spring (21), which is operatively connected to the battery-compartment lid (2) and the battery compartment (1).

4. Industrial truck according to Claim 3, **characterized in that** the gas spring (21) is hinged on the battery compartment (1) in a region opposite to the axis (8).

5. Industrial truck according to any of Claims 1 to 4, **characterized in that** the battery-compartment lid (2) is provided with a lever arm (11; 12), which exerts the clamping force on the battery block (7) in the closed position, the battery block (7) being supported on a support element (16).

6. Industrial truck according to Claim 5, **characterized in that** an adjusting element (13; 14), in particular an adjusting screw, is arranged on the lever arm (11; 12) and is operatively connected to the battery block (7) in the closed position.

7. Industrial truck according to Claim 5 or 6, **characterized in that** the lever arm (11; 12) is operatively connected to an inner side of a vertical wall (15) of the battery block (7), which is adjacent to the axis of rotation (8), in the closed position of the battery-compartment lid (2).

8. Industrial truck according to any of the preceding claims, **characterized in that** the battery-compartment lid (2) is provided with a locking device (17), by means of which the battery-compartment lid (2) can be locked in the closed position.

## Revendications

1. Chariot de manutention comprenant un bloc de batterie qui est disposé dans un compartiment de batterie, le compartiment de batterie pouvant être fermé au moyen d'un couvercle de compartiment de batterie, qui peut pivoter entre une position d'ouverture et une position de fermeture et qui produit dans la position de fermeture une force de serrage agissant sur le bloc de batterie, **caractérisé en ce qu'**il est prévu un moyen (20) pour produire une force sollicitant le couvercle de compartiment de batterie (2) dans la position d'ouverture et dans la position de fermeture et ce moyen fixe en outre la batterie.

2. Chariot de manutention selon la revendication 1, **caractérisé en ce que** le couvercle de compartiment de batterie (2) est monté de manière à pouvoir tourner autour d'un axe essentiellement horizontal (8) qui est disposé sur le bloc de batterie (7), la ligne d'action de la force dans la position d'ouverture du couvercle de compartiment de batterie (2) étant disposée au-dessus de l'axe (8) et dans la position de fermeture du couvercle de compartiment de batterie (2) étant disposée sous l'axe (8).

3. Chariot de manutention selon la revendication 1 ou 2, **caractérisé en ce que** le moyen (20) pour produire la force est réalisé sous la forme d'au moins un ressort à gaz (21) qui est en liaison coopérante avec le couvercle de compartiment de batterie (2) et le compartiment de batterie (1).

4. Chariot de manutention selon la revendication 3, **caractérisé en ce que** le ressort à gaz (21) est articulé sur le compartiment de batterie (1) dans une région en regard de l'axe (8).

5. Chariot de manutention selon l'une quelconque des revendications 1 à 4, **caractérisé en ce que** le couvercle de compartiment de batterie (2) est pourvu d'un bras de levier (11 ; 12) qui exerce dans la position de fermeture la force de serrage sur le bloc de batterie (7), le bloc de batterie (7) étant supporté sur un élément de support (16).

6. Chariot de manutention selon la revendication 5, **caractérisé en ce que** l'on dispose sur le bras de levier (11 ; 12) un élément de réglage (13 ; 14), en particulier une vis de réglage, qui est en liaison coopérante avec le bloc de batterie (7) dans la position de fermeture.

7. Chariot de manutention selon la revendication 5 ou 6, **caractérisé en ce que** dans la position de fermeture du couvercle de compartiment de batterie (2), le bras de levier (11 ; 12) est en liaison coopérante avec un côté interne d'une paroi verticale (15) du bloc de batterie (7) qui est voisine de l'axe de rotation (8).

8. Chariot de manutention selon l'une quelconque des revendications précédentes, **caractérisé en ce que** le couvercle de compartiment de batterie (2) est pourvu d'un dispositif de verrouillage (17) avec lequel le couvercle de compartiment de batterie (2) peut être verrouillé dans la position de fermeture.
